# FASCICULE DE BREVET EUROPEEN

(11) **EP 2 022 267 B1**
(45) Date de publication et mention de la délivrance du brevet: **14.08.2019**
(21) Numéro de dépôt: 07731400.3
(22) Date de dépôt: 02.05.2007
(51) Int. Cl.: H04N 7/16

(54) **ENTITE ELECTRONIQUE PORTABLE APTE A RECEVOIR UN FLUX DE DONNEES MULTIMEDIA DIFFUSE**
TRAGBARE ELEKTRONISCHE ENTITÄT MIT DER FÄHIGKEIT ZUM EMPFANG EINES AUSGESTRAHLTEN MULTIMEDIA-DATENFLUSSES
PORTABLE ELECTRONIC ENTITY CAPABLE OF RECEIVING BROADCAST MULTIMEDIA DATA FLOW

(30) Priorité: 02.05.2006 FR 0651572
(43) Date de publication de la demande: 11.02.2009
(73) Titulaire: IDEMIA France, 92400 Courbevoie (FR)
(72) Inventeur: BERTIN, Marc, 78720 La Celle les Bordes (FR)
(74) Mandataire: Santarelli
(86) Numéro de dépôt international: PCT/FR2007/000752
(87) Numéro de publication internationale: WO 2007/125223

(56) Documents cités:
- EP-A2- 1 387 238
- WO-A-2005/069614
- DE-U1-202006 001 690
- US-A1- 2006 051 071

## Description

La présente invention se rapporte à une entité électronique portable apte à recevoir un flux de données multimédia diffusé.

Elle trouve une application dans la réception d'un flux de données multimédia diffusé, notamment, la réception de la télévision numérique terrestre, et en particulier, la réception de chaînes payantes nécessitant soit un abonnement soit un paiement préalablement à la visualisation.

Un exemple d'entité électronique portable est une clé électronique ou « *dongle* » qui comprend généralement une interface lui permettant de se connecter à un terminal hôte, qui peut être une station de travail, un ordinateur, un téléphone mobile, un assistant personnel, une télévision numérique, un lecteur MP3, *etc.* Il peut s'agir d'une carte à microcontrôleur sécurisé conforme à la norme ISO 7816 ou une carte à microcircuit conforme à la spécification MMC (« *MultiMedia Memory Cards* » en terminologie anglo-saxonne), d'un téléphone portable, ou d'un PDA. Le plus souvent, l'interface de la clé électronique est conforme à la norme USB (« *Universal Serial Bus »* en terminologie anglo-saxonne) qui décrit un système de bus série universel développé pour assurer une gestion simple et rapide des échanges de données entre un terminal hôte et un dispositif périphérique, par exemple une entité électronique portable, un clavier ou autre dispositif électronique. L'interface de la clé électronique peut également être conforme à d'autres normes telles que la norme ISO 7816, la norme PCMCIA (« *Personal Computer Memory Card International Association* » en terminologie anglo-saxonne) ou la norme MMC. L'entité électronique portable peut également comprendre une interface sans contact, notamment, une interface conforme à la norme WIFI ou Bluetooth.

Le flux de données multimédia comporte notamment des données multimédia et/ou des données de programmes. Dans le cas de données multimédia, une application audio et / ou visuel permettant l'affichage ou l'audition des données est requise. Dans le cas de données de programmes, il est fait appel à des moyens pour exécuter les données. Les données sont notamment sous forme numérique, par exemple au format MPEG ou de type DVB (« *Digital Video Broadcasting* » en terminologie anglo-saxonne).

Il est connu du document DE 20 2006 001690 U1, une clé USB dotée de moyens de réception de télévision, qui peut être connectée à un module externe d'accès conditionnel, et pour laquelle le terminal hôte exécute un programme de réception. Il est par ailleurs connu du document EP 1633 133, intitulé « *Portable apparatus for enabling reproduction of television »,* une clef USB comportant des moyens de réception d'un flux de données diffusé, appelé aussi flux « *broadcasted* » en terminologie anglo-saxonne, et des moyens de connexion à un terminal hôte pour transmettre au terminal hôte des données issues du flux de données réceptionné. La clef USB, décrite dans ce document, peut également comporter des moyens de re-codage et de compression de données.

Toutefois, ce dispositif décrit ne permet pas de sécuriser la restitution des données reçues.

Ce dispositif ne confère pas en effet un degré de sécurité totalement satisfaisant dans la mesure où ni le terminal hôte, ni l'entité électronique ne sont en fait sécurisés. Il en résulte qu'une personne malveillante peut obtenir les données du flux et les utiliser sans avoir acquis les droits associés à ces données.

Il est nécessaire en particulier en ce qui concerne les chaines payantes, en effet, que seuls les utilisateurs ayant acquis une autorisation, aussi appelé licence, soient en mesure de recevoir les données.

La présente invention remédie, notamment, à au moins un des inconvénients précités. La présente invention est définie par les revendications 1 à 9.

Une entité électronique portable peut comprendre une interface de communication avec un terminal hôte, des moyens de conversion d'un signal reçu en un flux de données multimédia sécurisé et des moyens de transmission au terminal hôte d'un flux de données multimédia obtenu à partir du flux de données multimédia sécurisé, et des moyens aptes à autoriser une restitution au niveau du terminal hôte du flux de données multimédia transmis.

Par exemple, l'interface de communication avec le terminal hôte est conforme à la norme USB.

Ainsi, l'entité électronique portable est apte à commander la restitution éventuelle du flux de données diffusé et reçu sous forme sécurisée. De cette manière, la restitution du flux de données est autorisée seulement aux utilisateurs habilités et non aux utilisateurs malveillants.

Les moyens aptes à autoriser la restitution comprennent des moyens de blocage de la transmission d'une information au terminal hôte, les moyens de blocage étant activés en cas de non restitution du flux de données multimédia. Les moyens de blocage sont par exemple aptes à commander les moyens de transmission de manière à bloquer la transmission du flux de données multimédia.

En cas de détection de manipulations frauduleuses, les données du flux reçu ne sont plus émises au terminal hôte de manière à ne pas permettre un transfert de ces données à un utilisateur malveillant.

En variante, on pourrait prévoir le blocage de la transmission au terminal hôte d'une clé cryptographique (par exemple de décryptage) utilisée lors de la restitution du flux au niveau du terminal hôte.

Les moyens aptes à autoriser la restitution peuvent comprendre selon un autre mode de réalisation des moyens d'arrêt aptes à commander les moyens de conversion de manière à empêcher ladite conversion en cas de non restitution du flux de données multimédia.

Les moyens aptes à autoriser la restitution peuvent comprendre des moyens de décryptage du flux de données multimédia sécurisé.

Par exemple, le flux de données sécurisé étant diffusé crypté, l'entité électronique portable comprend les moyens de décryptage de ce flux.

La restitution peut être interdite au niveau du terminal hôte par l'absence de décryptage du flux par l'entité électronique (lorsque celle-ci contient les moyens de décryptage) ou par l'absence de la transmission d'une clé cryptographique au terminal hôte comme déjà évoqué (lorsque celui-ci contient les moyens de décryptage).

On peut également prévoir que l'entité électronique portable comprend en outre de moyens de mémorisation d'informations de décryptage aptes à décrypter le flux de données multimédia reçu.

L'entité électronique portable peut comprendre en outre une mémoire contenant une application de traitement du flux de données multimédia, et des moyens de chargement aptes à charger et à exécuter ladite application issue de la mémoire dans le terminal hôte après connexion de l'entité électronique au terminal hôte.

L'utilisateur de cette entité électronique portable peut ainsi installer l'application de traitement du flux de données sur n'importe qu'elle terminal hôte afin de recevoir les données, s'il est autorisé. En effet, il n'est pas nécessaire que l'application soit préalablement installée sur le terminal hôte.

L'application de traitement du flux de données reçu peut être à lancement automatique, après la connexion de l'entité électronique portable au terminal hôte.

Sans action de l'utilisateur de l'entité électronique portable, l'application est automatiquement installée sur le terminal hôte et exécutée lors de la connexion de l'entité sur le terminal. De la sorte l'application est aisément installée sur le terminal hôte sans manipulation complexe pour l'utilisateur.

Les moyens aptes à autoriser la restitution comprennent par exemple des moyens de sécurisation aptes à sécuriser au moins en partie l'exécution de ladite application de traitement du flux de données multimédia ainsi chargé et exécuté dans le terminal hôte selon un mode de sécurisation prédéterminé.

L'application est sécurisée afin de s'assurer que le flux de données reçu et transmis à cette application soit seulement apte à être traité par cette dernière.

Les moyens de sécurisation peuvent être aptes à former une partie au moins de ladite application de traitement à chaque chargement, par exemple en sélectionnant l'application de traitement parmi une pluralité d'applications possibles, ou en modifiant (éventuellement de manière aléatoire) avant chargement, dans le terminal hôte, une partie de l'application mémorisée dans l'entité électronique. Ainsi l'application de traitement exécutée au sein du terminal hôte peut être différente après chaque chargement, par exemple après chaque connexion de l'entité électronique à celui-ci.

La formation de ladite partie utilise par exemple une valeur imprévisible de l'extérieur de l'entité électronique, du type nombre aléatoire ou pseudo-aléatoire, ce qui améliore encore la sécurisation.

Les moyens de sécurisation de l'exécution de l'application de traitement du flux de données peuvent être aptes à mettre en oeuvre un protocole d'authentification du porteur de l'entité entre ladite entité électronique portable et le terminal hôte.

On s'assure ainsi que seul l'utilisateur autorisé est apte à recevoir les données du flux.

Ladite application de traitement du flux de données multimédia peut mettre en oeuvre au moins une clé cryptographique temporaire.

Les moyens de sécurisation de l'application de traitement du flux de données peuvent en outre être aptes à sécuriser toute modification apportée à ladite application de traitement du flux de données.

L'application de traitement du flux de données peut comprendre au moins deux parties : un programme principal exécuté par le terminal hôte et au moins un programme auxiliaire stocké et exécuté dans ladite entité connectée au terminal hôte, le programme principal générant des commandes d'exécution de tout ou partie dudit programme auxiliaire.

On peut également prévoir que le programme auxiliaire est découpé en une pluralité de tronçons, à chaque tronçon étant associé un code d'authentification.

L'entité électronique portable peut comprendre des moyens de vérification de code d'authentification, et des moyens de blocage de ladite entité en cas de vérification négative.

De la sorte, le flux de données ne peut pas être reçu par un utilisateur non autorisé.

L'application de traitement est par exemple apte à décoder le flux multimédia transmis (par exemple d'un flux de type DVB à un flux de type MPEG) et/ou à décompresser celui-ci, par exemple en réalisant un décodage de type MPEG.

L'entité électronique portable peut comprendre, en outre, des moyens de sécurisation de la communication entre ladite entité électronique portable et le terminal hôte.

Le canal de communication entre l'entité électronique portable et l'application de traitement peut être sécurisé.

Les moyens de sécurisation de la communication peuvent comprendre des moyens de cryptage du flux de données multimédia à transmettre au terminal hôte.

Les moyens de cryptage du flux de données multimédia peuvent être aptes à crypter le flux de données à partir d'une clé de session.

La clé de session est par exemple dérivée à partir d'une donnée (typiquement une clé) contenue dans l'application de traitement (et donc aussi connue de l'entité électronique) ; cette clé de session peut ainsi être différente à chaque chargement de l'application de traitement.

Le flux de données multimédia sécurisé étant crypté, les moyens de sécurisation peuvent être aptes à transmettre de manière sécurisée au terminal hôte une clé de décryptage du flux de données multimédia sécurisé.

L'entité électronique portable (100) peut être une clé USB.

Les moyens de conversion comprennent par exemple une interface de réception apte à être reliée à une antenne de réception, ou en variante à un réseau câblé. Les signaux reçus peuvent en effet être diffusés au moyen de communications à distance (par exemple de type radiofréquence ou satellite) ou au moyen du réseau câblé.

Les moyens de conversion comprennent par exemple notamment un circuit de démodulation qui permet la conversion du signal reçu à sa fréquence de transmission (ou à une fréquence du même ordre) en un signal en bande de base et/ou un circuit de syntonisation (qui permet de sélectionner la fréquence de transmission à recevoir).

Les caractéristiques et avantages de l'invention apparaîtront à la lumière de la description détaillée ci-après et des dessins dans lesquels :
- la figure 1 représente schématiquement les éléments d'une entité électronique portable connectée à un terminal hôte selon l'invention, et
- la figure 2 représente un algorithme permettant la réception d'un flux de documents et conforme à l'invention.

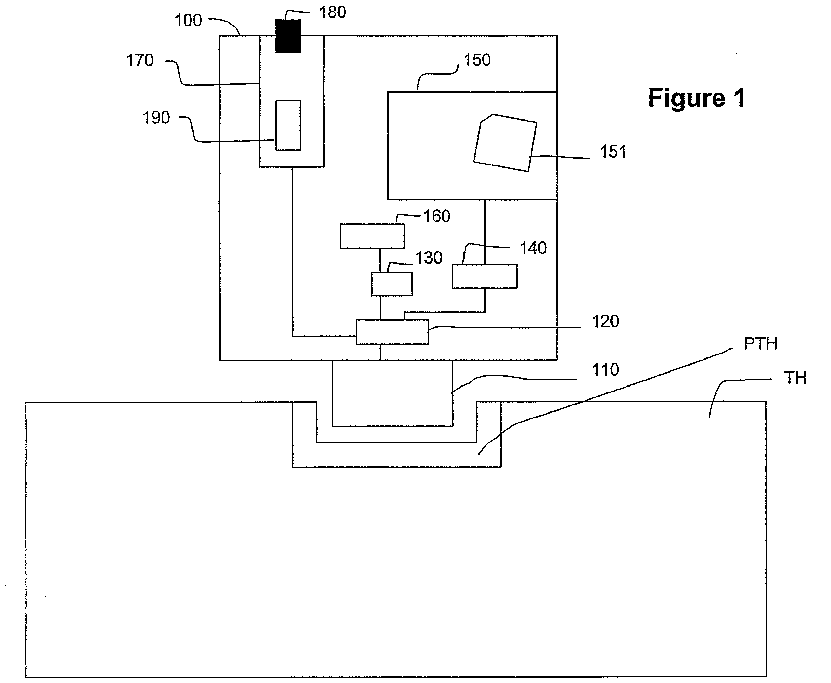

En référence à la **figure 1****,** on a représenté les éléments constitutifs d'une entité électronique portable 100, formant ici un dongle décodeur ou clé électronique USB. L'entité électronique 100 comprend une interface 110 permettant de se connecter au port PTH d'un terminal hôte TH.

Préférentiellement, l'interface 110 et le port PTH sont des ports conformes à la norme USB. En variante, les interfaces 110 et PTH sont de type PCMCIA ou MMC.

Le terminal hôte TH est susceptible de recevoir, lire et / ou traiter des données.

L'entité électronique portable, ici une clé USB 100, a une forme générale composée de circuits montés typiquement sur un circuit imprimé. D'autres variantes d'architecture sont bien évidemment à la portée de l'homme du métier.

La clé USB 100, bien que de taille réduite (s'agissant en effet d'une entité électronique de poche, ou portable à la main selon la terminologie anglaise *« hand-held* »), permet en effet de regrouper les circuits décrits plus bas. Une telle clé USB 100 possède par ailleurs un connecteur (participant à l'interface mentionnée ci-dessus) formé dans le prolongement de son corps, c'est-à-dire principalement d'un capot recouvrant l'ensemble des circuits électroniques et délimitant le volume extérieur de la clé USB 100.

Un organe formant concentrateur 120, appelé encore « *hub* » en terminologie anglo-saxonne, permet de connecter de manière connue plusieurs périphériques conformes à la norme USB au port USB 110.

L'entité 100 comprend un lecteur de carte à puce 130 apte à communiquer selon le protocole USB et relié au concentrateur 120. Avantageusement, le lecteur de carte à puce 130 est un périphérique USB standard dont les contrôleurs sont intégrés au système d'exploitation du terminal hôte TH, ce qui confère l'avantage d'éviter l'installation préalable de tels contrôleurs lors de l'utilisation de la clé USB 100. Par exemple, le lecteur de carte à puce comprend un contrôleur de type USB CCID (« *Chip Card Interface Device* », c'est-à-dire dispositif d'interface de carte à puce).

Une carte à puce 160 formant moyens de sécurisation est logée dans le lecteur de carte à puce 130 ; la carte à puce 160 (parfois dénommée carte à microcircuit) est apte notamment à autoriser (c'est-à-dire en quelque sorte à décider et à commander) la restitution des données et à sécuriser cette restitution des données. La carte à puce 160 est par exemple une carte au format ID-000 conforme à la norme ISO-7816. Le lecteur 130 comprend un logement permettant de recevoir le module de la carte 160. Un capot amovible (non représenté) permet par exemple d'insérer le module 160 dans le logement approprié.

En variante, la carte à puce 160 est un circuit de type microcontrôleur sécurisé adapté à communiquer selon la norme USB, par exemple, un circuit directement fixé et connecté au circuit de l'entité 100, sans lecteur. Un tel contrôleur sécurisé est lui aussi capable de décider et de sécuriser la restitution des données.

L'entité 100 comprend en outre une mémoire 150. En pratique, la mémoire 150 comprend au moins une partie non volatile. Par exemple, la mémoire 150 est une mémoire de type Flash de 128 Mo.

La mémoire 150 est contrôlée par un contrôleur 140, lui-même relié au concentrateur 120.

En outre, l'entité électronique comprend des moyens de réception 170 d'un flux de données diffusé qui permettent la conversion d'un signal reçu, par exemple en provenance d'une antenne, en un flux de données multimédia sécurisé. Ces moyens de réception 170 comprennent une interface de réception, notamment un connecteur 180 apte à être relié à une antenne RF ou à une parabole de réception d'un flux émis par satellite, ou à un réseau par câble. L'interface de réception peut également être un récepteur de données sans fil, par exemple conforme à la norme WIFI ou Bluetooth.

En variante, l'entité électronique 100 pourrait inclure une antenne de réception (au lieu d'un connecteur à une telle antenne).

Les moyens de réception 170 comprennent également ici un circuit de syntonisation (parfois dénommé « *tuner* ») et un circuit de démodulation, ici de démodulation QPSK, 190.

Les moyens de réception 170, reliés au concentrateur 120, sont ainsi aptes à recevoir un flux de données conformes à divers formats, notamment, le format MPEG ou le format DVB. A ce stage du traitement, les données sont toujours sécurisées, par exemple cryptées au moyen d'une clé cryptographique.

La mémoire 150 mémorise une application de traitement 151 du flux de données reçu, comprenant, notamment, des moyens de décryptage des données du flux reçu, des moyens de décodage du flux diffusé, en particulier aptes à extraire du flux DVB les données au format MPEG, et des moyens de décompression, par exemple un décodeur MPEG.

En pratique, le contrôleur 140 est capable d'émuler le fonctionnement d'un lecteur de CD ROM comportant un logiciel de gestion de l'application de traitement 151 du flux de données reçu de type lancement automatique appelé encore « *autorun* ». En d'autres termes, le logiciel de gestion de l'application de traitement du flux de données reçu est exécuté automatiquement par le terminal hôte lorsque l'entité 100 se connecte au terminal hôte TH conformément au protocole USB.

En variante, le logiciel de gestion de l'application de traitement du flux de données reçu 151 est chargé dans une zone mémoire non volatile ROM du contrôleur 140.

Selon un mode de réalisation, on charge une nouvelle version de l'application de traitement du flux de données reçu 151 ou un autre programme.

Cette mise à jour est, par exemple, gérée par un programme mémorisé dans la mémoire 150. Pour ce faire, le programme se connecte de façon sécurisée à une entité autorisée, par exemple à un serveur du réseau, en utilisant par exemple les moyens de sécurisation de la carte à puce 160, notamment, par authentification, cryptage ou signature.

En effet, le terminal hôte sur lequel est connectée l'entité peut être connecté à un réseau de communication unidirectionel ou bidirectionnel, par exemple au réseau Internet ou à un réseau de télécommunication mobile.

Cette communication sécurisée est notamment réalisée au moyen d'une clé de session K₁.

En outre, la clef de session peut être utilisée dans les modes de réalisation suivants afin de réaliser la sécurisation de la communication entre l'entité électronique (clé USB 100) et le terminal hôte TH, c'est-à-dire ici l'application de traitement du flux de données transmis.

Selon un mode de réalisation, le flux de données sécurisé (c'est-à-dire protégé, par exemple crypté) est reçu par l'entité 100 et est décrypté par celle-ci (c'est-à-dire par des moyens de décryptage installés au sein de celle-ci). Le flux décrypté est alors communiqué à l'application de traitement 151 installée sur le terminal hôte TH après avoir été crypté par la clé de session K₁ dans l'entité 100. Le terminal hôte TH procède alors à un nouveau décryptage du flux grâce à la clé de session K₁.

Selon un autre mode de réalisation, le flux de données protégé (ou crypté) est reçu par l'entité 100. Celle-ci détermine à partir des informations contenues dans le flux de données (ou reçues par ailleurs) une clé de cryptage temporaire K₂. L'entité 100 crypte alors la clé de cryptage temporaire K₂ par la clé de session K₁ et transmet le flux de données reçu et la clé de cryptage temporaire K₂ cryptée à l'application de traitement 151 installée sur le terminal hôte TH. Le terminal hôte TH, qui détient la clé de session K₁, a ainsi accès à la clé de cryptage temporaire K₂ et peut alors procéder au décryptage du flux.

La clé de session est notamment déterminée à partir d'une clé interne et d'une clé extraite du flux de données ou d'une donnée communiquée selon un autre moyen : elle est par exemple mémorisée dans la mémoire 160 et transmise au terminal hôte TH au sein de l'application de traitement 151.

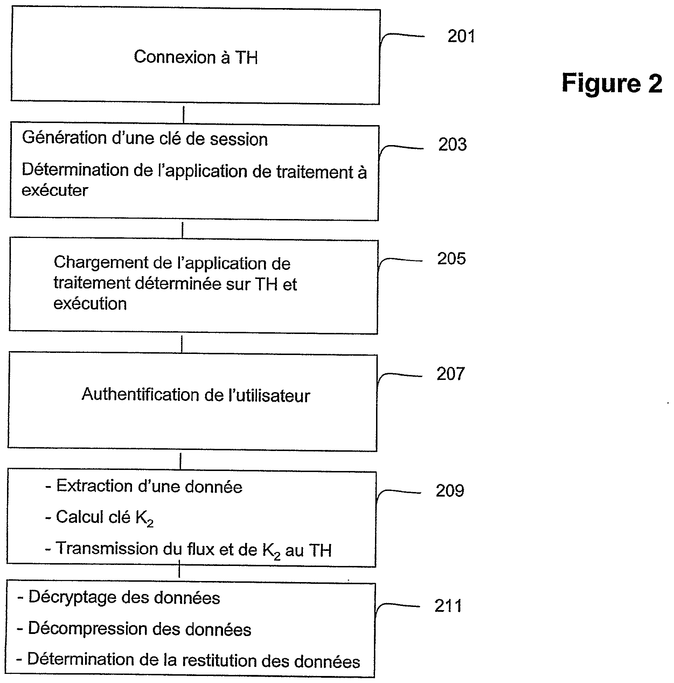

Il est maintenant décrit, en référence à la **figure 2****,** le procédé mis en oeuvre dans l'entité électronique portable.

L'algorithme débute à l'étape 201 par la connexion de l'entité électronique portable sur le terminal hôte.

Ensuite, les moyens de sécurisation engendre une clé de session, aussi appelée clé temporaire (étape 203) qui est mémorisée, et qui est également inscrite dans l'application de traitement du flux de données reçu 151, notamment au moyen du contrôleur 140.

Selon un mode de réalisation particulier, les moyens de sécurisation 160 modifient à chaque connexion de l'entité électronique portable 100 sur un terminal hôte TH, l'application de traitement du flux de données reçu 151.

Selon un mode de réalisation particulier, l'entité électronique portable 100 comprend une pluralité d'applications de traitement du flux de données reçu 151 et, à chaque nouvelle connexion, l'entité électronique 100 choisit aléatoirement l'application de traitement 151 devant s'exécuter sur le terminal hôte TH.

Ces modes de réalisation permettent à l'entité électronique portable 100 de communiquer avec une application de traitement 151 bien identifiée par l'entité électronique et empêche tout utilisateur de lire les données reçues par l'entité électronique à partir d'une application non installée par l'entité électronique portable.

L'étape 203 est suivie de l'étape 205 au cours de laquelle l'application de traitement du flux de données reçu 151 est chargée automatiquement dans la mémoire vive du terminal hôte TH et exécutée par le terminal hôte lors de la connexion de l'entité électronique 100 sur le terminal hôte TH.

Ce chargement automatique a lieu lorsque le port (ou connecteur) 110 de l'entité 100 est engagé dans le port PTH du terminal hôte TH.

En variante, l'utilisateur charge manuellement l'application de traitement du flux de données 151 sur le disque dur du terminal hôte, grâce par exemple à l'interface graphique du terminal hôte et le contrôleur 140 qui permet de lire/écrire dans la mémoire 150 de l'entité 100. Dans cette variante, le contrôleur 140 n'a pas besoin d'émuler un CD ROM conformément au protocole USB.

L'exécution de l'application de traitement du flux de données 151 est en outre au moins en partie sécurisée selon l'invention.

Tout d'abord, le chargement et l'exécution de l'application de traitement du flux de données 151 par le terminal hôte sont préférentiellement autorisés à la suite d'une authentification du porteur de l'entité électronique portable 100 (étape 207).

Par exemple, l'authentification du porteur de l'entité 100 est de type présentation d'un mode de passe, un identifiant, un code personnel PIN, une clé.

Par exemple, le lancement automatique de l'application de traitement du flux de données 151 peut comporter une étape de demande de saisie et de vérification d'un code personnel PIN. Cette étape de vérification est avantageusement mise en oeuvre par le contrôleur 140 ou la carte à puce 160.

Selon l'étape 209, l'application de traitement de données extrait une donnée du flux et transmet cette donnée aux moyens de sécurisation qui calculent une seconde clé temporaire K₂ à partir de la donnée extraite et d'une clé mémorisée dans la mémoire de l'entité électronique portable. La clé K₂ est émise à l'application de traitement de façon cryptée.

A l'étape 211, l'application de traitement de données décrypte la données au format MPEG en utilisant la clé K₂, décompresse les données MPEG et les restitue, par exemple, au moyen d'un écran et de sortie audio.

En outre, la communication entre l'entité électronique et l'application de traitement exécutée sur le terminal hôte est sécurisée, notamment au moyen de mécanismes cryptographiques, par exemple à partir de la clé de session K₁, afin d'éviter l'obtention des données par une personne malveillante lorsque celles-ci sont transmises de l'entité électronique portable à l'application de traitement exécutée sur le terminal hôte.

Dans un autre mode de réalisation de l'invention, l'application de traitement 151 du flux de données peut comprendre au moins deux parties : un programme principal exécuté par le terminal hôte TH et au moins un programme auxiliaire stocké en mémoire 150 et exécuté par l'entité 100 lorsqu'elle est connectée au terminal hôte TH.

Dans ce contexte, le programme principal génère des commandes d'exécution de tout ou partie dudit programme auxiliaire après vérification positive conformément au protocole d'authentification du porteur de l'entité décrit ci-avant.

Selon encore une autre variante de réalisation, le logiciel de gestion 151 peut comporter des séquences d'authentification à des instants donnés lors du déroulement de l'application de traitement du flux de données reçu.

Ainsi, l'application de traitement du flux de données 151 peut comporter des instructions consistant à envoyer un code d'authentification en provenance du terminal hôte TH à destination de la carte à puce 160. Dans le cas où le code d'authentification ainsi reçu ne correspond pas au code d'authentification attendu par la carte 160, la carte à puce 160 émet une instruction de non restitution du flux de données reçu aux moyens de blocage de manière à activer ces moyens. De la sorte, les moyens de blocage bloquent, par exemple, la transmission du flux de données au terminal hôte, la réception du flux de données diffusé par l'entité 100 ou simplement la transmission de la clé de décryptage K₂ sans laquelle l'application de traitement ne peut pas restituer le flux vidéo.

En variante, l'instruction de non restitution peut être envoyée au terminal hôte par la carte à puce 160.

Dans ce cas, cette instruction a pour fonction de bloquer, par exemple la restitution du flux de données diffusé notamment à l'utilisateur, ou la réception par le terminal hôte de la réception du flux de données.

L'instruction de non restitution peut aussi correspondre à une donnée écrite spécifiquement en mémoire non volatile de la carte 160, pour empêcher ultérieurement le fonctionnement de l'entité 100 et donc bloquer l'entité, par exemple comme décrit ci-dessus.

Selon un mode de réalisation envisageable, l'interdiction de la restitution (et donc le blocage de l'entité électronique et/ou de la transmission d'une information permettant la restitution au niveau du terminal hôte) peut être décidée par l'entité électronique 100 en fonction de droits d'accès au flux de données multimédia reçu enregistrés dans la carte à puce 160, par exemple sur la base de la comparaison (éventuellement périodique) d'identifiants incorporés dans le flux sécurisé avec des identifiants contenus dans la mémoire de la carte 160 en fonction des licences détenues par la carte 160 pour les programmes audiovisuels susceptibles d'être représentés par les flux reçus.

La sécurisation de l'application de traitement du flux de données 151 peut aussi comporter des éléments aléatoires pour conférer un degré de sécurité supplémentaire.

En premier lieu, cet aspect aléatoire peut être appliqué dans le cas où l'application de traitement du flux 151 comprend des séquences d'authentification, consistant à envoyer des codes d'authentification comme décrit ci-avant. Ces codes d'authentification peuvent être modifiés de manière aléatoire ou pseudo-aléatoire.

De même, l'instant de l'envoi de ces codes d'authentification peut aussi être aléatoire, avantageusement dans une plage limitée prédéterminée.

En second lieu, cet aspect aléatoire peut être appliqué dans le cas du partage de l'application de traitement du flux de données 151 en deux parties, l'une principale exécutée par le terminal hôte TH, et l'autre auxiliaire exécutée par l'entité 100. Par exemple, la ou les zones de découpage sont ainsi aléatoires. Ce partage aléatoire peut intervenir à chaque chargement de l'application de traitement du flux 151 sur le terminal hôte TH intervenant par exemple automatiquement à la suite de chaque connexion de l'entité électronique portable 100 au terminal hôte TH.

Par exemple, l'application de traitement du flux de données 151 est susceptible d'être prédécoupée en plusieurs tronçons dans une zone mémoire de la mémoire 150 ou dans une zone mémoire ROM du contrôleur 140. A chaque tronçon, on associe en outre des instructions de communication permettant la communication entre le terminal TH et l'entité 100. Cette association intervient par exemple dans le cas du partage de l'application de traitement du flux de données 151 en plusieurs parties et/ou lors de l'envoi des codes d'authentification décrit ci-avant. On sélectionne ensuite aléatoirement des groupes de tronçons contigus et on exécute uniquement parmi les instructions de communication associées à chaque tronçon, les instructions de communication séparant deux groupes de tronçons ainsi sélectionnés. En pratique, chaque tronçon de l'application de traitement du flux de données peut avoir une taille différente. Chaque tronçon est constitué de codes écrits en langage machine, assembleur, C, ou Java, etc.

Pour renforcer encore la protection, l'entité 100 peut en outre comporter des moyens de vérification d'une condition sur la fréquence d'un certain type de données communiquées à ladite entité 100 par l'application de traitement du flux de données 151 exécutée par le terminal hôte TH.

Ainsi, l'entité 100 et plus particulièrement la carte à puce 160, est capable de vérifier la fréquence avec laquelle les codes d'authentification sont reçus du terminal hôte TH.

La fréquence peut se mesurer par rapport au temps. Dans ce contexte, l'entité 100 comprend une horloge ou un moyen quelconque de mesure de temps.

Selon un mode de réalisation, la condition sur la fréquence est associée à un seuil ou une fréquence minimum. La notion de fréquence s'apprécie ici au sens large. En effet, on peut démarrer une temporisation dans l'entité 100 à chaque code d'authentification de l'application 151 reçu du terminal TH. A la fin de la temporisation, par exemple au bout d'une minute, s'il n'y a pas eu de nouvelle authentification, une anomalie est détectée entraînant par exemple la non restitution du flux de données reçu en réponse à une commande issue de la carte à puce 160.

Grâce à l'invention, le porteur de l'entité électronique portable 100, notamment, d'une clé électronique USB, peut ainsi se connecter à n'importe quel ordinateur hôte, sans avoir à installer préalablement une application de traitement d'un flux de données diffusé. En effet, conformément à l'invention, l'entité électronique portable, une fois connectée au terminal hôte, se charge d'installer l'application de traitement du flux de données reçu par l'entité, sans se soucier de la configuration du terminal hôte, ni de la sécurisation de la communication entre l'entité électronique portable et l'application de traitement installée sur le terminal hôte.

## Revendications

1. Clé USB comprenant :
- une interface de communication (110) avec un terminal hôte (TH), l'interface de communication (110) étant conforme à la norme USB,
- des moyens de réception (170) d'un flux de données diffusé qui permettent la conversion d'un signal reçu en un flux de données multimédia sécurisé,
- des moyens de décryptage aptes à décrypter le flux de données multimédia sécurisé,
la clé USB étant **caractérisée en ce qu'**elle comprend de plus :
- une carte à puce (160) adaptée à communiquer selon la norme USB, ladite carte à puce (160) étant apte à générer une clé de session (K1) et à crypter, avec ladite clé de session (K1), le flux de données multimédia décrypté par les moyens de décryptage,
- une mémoire contenant une application de traitement (151) de flux de données multimédia, ladite clé de session (K1) étant inscrite dans ladite application de traitement (151),
- des moyens de transmission au terminal hôte dudit flux de données multimédia crypté, et
- des moyens de chargement aptes à charger et exécuter ladite application de traitement (151) dans le terminal hôte (TH) après connexion de la clé USB au terminal hôte,
ladite application de traitement (151) comportant des instructions consistant à envoyer un code d'authentification du porteur de la clé USB (100) en provenance du terminal hôte (TH) à destination de la carte à puce (160), ledit code d'authentification étant basé sur un code personnel saisi par le porteur de la clé USB au niveau du terminal hôte, la carte à puce (160) étant apte à envoyer une instruction de non restitution au terminal hôte ayant pour fonction d'empêcher la restitution du flux de données au niveau du terminal hôte en cas de non correspondance du code d'authentification envoyé avec un code d'authentification attendu.

2. Clé USB selon la revendication 1, dans laquelle la carte à puce (160) est apte à commander les moyens de transmission de manière à bloquer la transmission du flux de données multimédia crypté.

3. Clé USB selon la revendication 1, dans laquelle la carte à puce (160) est apte à commander les moyens de réception (170) de manière à empêcher ladite conversion.

4. Clé USB selon l'une des revendications 1 à 3, dans laquelle la carte à puce (160) comprend des moyens de décryptage du flux de données multimédia sécurisé, et des moyens de mémorisation d'informations de décryptage aptes à décrypter le flux de données multimédia reçu.

5. Clé USB selon l'une quelconque des revendications précédentes, dans laquelle l'application de traitement (151) est à exécution automatique, après la connexion de la clé USB (100) au terminal hôte (TH).

6. Clé USB selon l'une des revendications précédentes, dans laquelle l'application de traitement (151) est apte à décompresser le flux multimédia transmis.

7. Clé USB selon la revendication 6, dans laquelle l'application de traitement (151) est apte à réaliser un décodage de type MPEG.

8. Clé USB selon l'une des revendications précédentes, dans laquelle les moyens de réception comprennent une interface de réception apte à être reliée à une antenne de réception.

9. Clé USB selon l'une des revendications précédentes, dans laquelle les moyens de réception comprennent un circuit de démodulation et un circuit de syntonisation.

## Patentansprüche

1. USB-Stick, umfassend:
- eine Schnittstelle zur Kommunikation (110) mit einem Host-Endgerät (TH), wobei die Schnittstelle zur Kommunikation (110) der USB-Norm entspricht,
- Mittel zum Empfang (170) eines ausgestrahlten Datenstroms, welche die Umwandlung eines Signals gestatten, das in einem gesicherten Strom von Multimediadaten empfangen wird,
- Entschlüsselungsmittel, die geeignet sind, den gesicherten Strom von Multimediadaten zu entschlüsseln, wobei der USB-Stick **dadurch gekennzeichnet ist, dass** er außerdem Folgendes umfasst:
- eine Chipkarte (160), die angepasst ist, entsprechend der USB-Norm zu kommunizieren, wobei die Chipkarte (160) geeignet ist, einen Sitzungsschlüssel (K1) zu erzeugen und mit dem Sitzungsschlüssel (K1) den Strom von Multimediadaten, der durch die Entschlüsselungsmittel entschlüsselt wurde, zu verschlüsseln,
- einen Speicher, der eine Anwendung zur Verarbeitung (151) von Strömen von Multimediadaten enthält, wobei der Sitzungsschlüssel (K1) in der Anwendung zur Verarbeitung (151) eingetragen ist,
- Mittel zur Übertragung des verschlüsselten Stroms von Multimediadaten an das Host-Endgerät, und
- Mittel zum Laden, die geeignet sind, die Anwendung zur Verarbeitung (151) nach Anschluss des USB-Sticks an das Host-Endgerät in das Host-Endgerät (TH) zu laden und darin auszuführen,
die Anwendung zur Verarbeitung (151) umfassend Anweisungen, die darin bestehen, einen Authentifizierungscode des Trägers des USB-Sticks (100) von dem Host-Endgerät (TH) an die Chipkarte (160) zu senden, wobei der Authentifizierungscode auf einem persönlichen Code basiert, der von dem Träger des USB-Sticks an dem Host-Endgerät eingegeben wird, wobei die Chipkarte (160) geeignet ist, eine Nichtrückgabe-Anweisung an das Host-Endgerät zu senden, deren Funktion darin besteht, im Falle einer Nichtübereinstimmung des gesendeten Authentifizierungscodes mit einem erwarteten Authentifizierungscode die Rückgabe des Datenstroms an dem Endgerät zu verhindern.

2. USB-Stick nach Anspruch 1, wobei die Chipkarte (160) geeignet ist, die Mittel zur Übertragung zu steuern, um die Übertragung des verschlüsselten Stroms von Multimediadaten zu blockieren.

3. USB-Stick nach Anspruch 1, wobei die Chipkarte (160) geeignet ist, die Mittel zum Empfang (170) zu steuern, um die Umwandlung zu verhindern.

4. USB-Stick nach einem der Ansprüche 1 bis 3, wobei die Chipkarte (160) Mittel zum Entschlüsseln des gesicherten Stroms von Multimediadaten und Mittel zur Speicherung von Entschlüsselungsinformationen, die geeignet sind, den empfangenen Strom von Multimediadaten zu entschlüsseln, umfasst.

5. USB-Stick nach einem der vorhergehenden Ansprüche, wobei die Anwendung zur Verarbeitung (151) zur automatischen Ausführung nach dem Anschließen des USB-Sticks (100) an das Host-Endgerät (TH) ist.

6. USB-Stick nach einem der vorhergehenden Ansprüche, wobei die Anwendung zur Verarbeitung (151) geeignet ist, den übertragenen Multimediastrom zu dekomprimieren.

7. USB-Stick nach Anspruch 6, wobei die Anwendung zur Verarbeitung (151) geeignet ist, eine Decodierung des MPEG-Typs durchzuführen.

8. USB-Stick nach einem der vorhergehenden Ansprüche, wobei die Mittel zum Empfang eine Empfangsschnittstelle umfassen, die geeignet ist, mit einer Empfangsantenne verbunden zu sein.

9. USB-Stick nach einem der vorhergehenden Ansprüche, wobei die Mittel zum Empfang eine Demodulationsschaltung und eine Abstimmungsschaltung enthalten.

## Claims

1. USB key comprising:
- a communication interface (110) for communicating with a host terminal (TH), the communication interface (110) being compliant with the USB standard,
- means (170) for receiving a broadcast data stream which allow the conversion of a received signal into a secure multimedia data stream,
- decryption means able to decrypt the secure multimedia data stream,
the USB key being **characterized in that** it further comprises:
- a chip card (160) adapted to communicate according to the USB standard, said chip card (160) being able to generate a session key (K1) and to encrypt, with said session key (K1), the multimedia data stream decrypted by the decryption means,
- a memory containing a multimedia data stream processing application (151), said session key (K1) being inscribed in said processing application (151),
- means for transmitting to the host terminal said encrypted multimedia data stream, and
- means for loading able to load and execute said processing application (151) in the host terminal (TH) after connection of the USB key to the host terminal,
said processing application (151) comprising instructions consisting in sending an authentication code in respect of the bearer of the USB key (100) originating from the host terminal (TH) to the chip card (160), said authentication code being based on a personal code entered by the bearer of the USB key at the host terminal, the chip card (160) being able to send a non-playback instruction to the host terminal the function of which is to prevent the playback of the data stream at the host terminal in case of noncorrespondence of the authentication code sent with an expected authentication code.

2. USB key according to Claim 1, in which the chip card (160) is able to control the transmission means in such a way as to block the transmission of the encrypted multimedia data stream.

3. USB key according to Claim 1, in which the chip card (160) is able to control the means of reception (170) in such a way as to prevent said conversion.

4. USB key according to one of Claims 1 to 3, in which the chip card (160) comprises means for decrypting the secure multimedia data stream, and means for storing decryption information able to decrypt the multimedia data stream received.

5. USB key according to any one of the preceding claims, in which the processing application (151) is executed automatically, after connection of the USB key (100) to the host terminal (TH).

6. USB key according to one of the preceding claims, in which the processing application (151) is able to decompress the multimedia stream transmitted.

7. USB key according to Claim 6, in which the processing application (151) is able to carry out a decoding of MPEG type.

8. USB key according to any one of the preceding claims, in which the reception means comprise a reception interface able to be linked to a reception antenna.

9. USB key according to any one of the preceding claims, in which the reception means comprise a demodulation circuit and a syntonization circuit.
